# EUROPEAN PATENT APPLICATION

(11) **EP 4 832 254 A2**
(43) Date of publication of application: **28.10.2026**
(21) Application number: 26160609.9
(22) Date of filing: 25.02.2026
(51) Int. Cl.: H01R 11/32, H01R 4/02, H01R 4/06, H01R 4/34, H01R 4/60, H01R 11/12

(54) **ELECTRICAL CONNECTION SYSTEM**

(30) Priority: 23.04.2025 US 202563793021 P; 13.02.2026 US 202619540355
(71) Applicant: Aptiv Technologies AG, 8200 Schaffhausen (CH)
(72) Inventor: FERRY, Richard, 8200 Schaffhausen (CH); DEAN, Robert, 8200 Schaffhausen (CH); PECHATSKO, John, 8200 Schaffhausen (CH); RICHARDS, Alexander, 8200 Schaffhausen (CH)
(74) Representative: Bardehle Pagenberg Partnerschaft mbB Patentanwälte Rechtsanwälte

(57) **Abstract**

An electrical connection system (200, 400, 500) includes a busbar (206, 406, 506) connectable to a first conductor (202, 402, 502), a terminal (208, 408, 508) with an aperture (210, 410, 510) therethrough and electrically connected to a second conductor (204, 404, 504), and a fastener (216, 414, 510) extending through the aperture (210, 410, 510) to fix the terminal (208, 408, 508) directly to the busbar (206, 406, 506). The fastener (216, 414, 510) secures the terminal (208, 408, 508) at a location offset from the first conductor (202, 402, 502), providing a direct and secure connection between the terminal (208, 408, 508) and the busbar (206, 406, 506). An alternative electrical connection system (700) includes a busbar (706) having a first weld pad (708) and a second weld pad (710) with a notch (712_ separating the first and second weld pad (708, 710). The notch (712) has a width equal to or greater than a thickness of the busbar (706). These configurations enable efficient and reliable electrical connections in various applications.

## Description

### ELECTRICAL CONNECTION SYSTEM

The subject matter disclosed herein relates to electrical connectors and, in particular, to electrical connection systems.

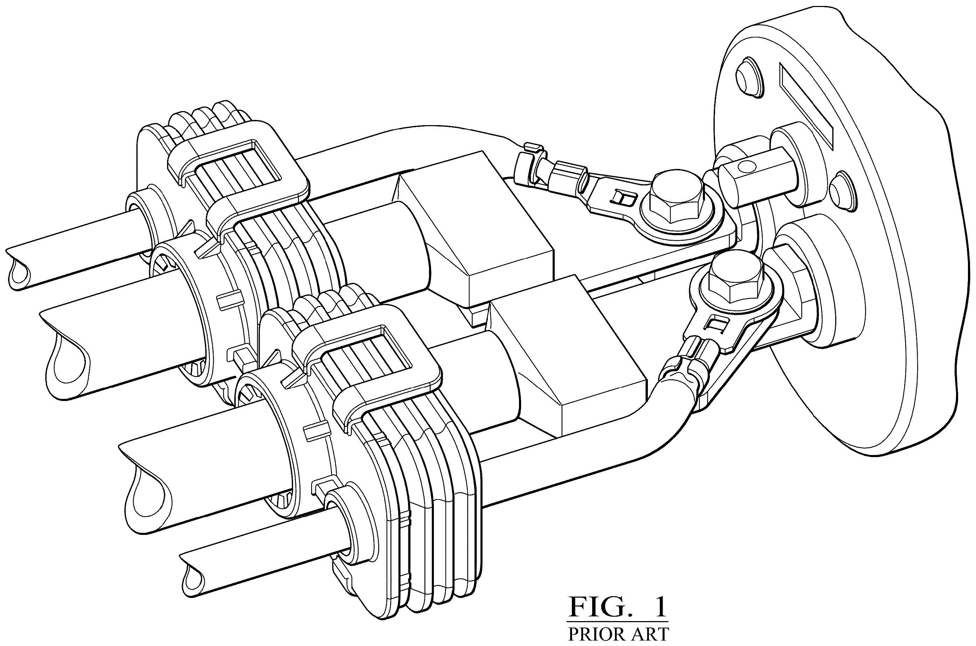

Electrical assemblies have been used in various applications to connect and manage electrical conductors. In some approaches, busbars have been used as a common connection point for multiple conductors, providing a convenient and efficient way to distribute electrical power. These busbars are often connected to conductors using terminals, which are typically attached to the busbar using screws, bolts, or other fastening mechanisms as shown in FIG. 1. The terminals are usually positioned in close proximity to the conductor, and the fastening mechanism is often located near the point of connection between the terminal and the conductor.

In other approaches, terminals have been designed with apertures or holes that allow them to be mounted directly to a busbar or other electrical component. These apertures can be used to receive a fastener, such as a screw or bolt, which secures the terminal to the busbar. However, in many cases, the terminal is attached to the busbar at a location that is directly adjacent to the conductor, which can limit the flexibility and versatility of the electrical connection system. Additionally, the use of multiple fasteners or complex mounting systems can add complexity and cost to the assembly process.

Some electrical assemblies have also employed specialized connectors or clips to attach terminals to busbars. These connectors can provide a secure and reliable connection between the terminal and the busbar, but they often require additional components or complex manufacturing processes. Furthermore, the connectors may be designed for specific types of terminals or busbars, which can limit their applicability in different electrical assemblies. In general, the design and configuration of electrical assemblies have been driven by the need to provide a reliable and efficient connection between conductors, while also minimizing complexity and cost.

Previous approaches to electrical assemblies have also included the use of adapters or spacers to position terminals at specific locations relative to busbars. These adapters can provide additional flexibility in the design of the electrical connection system, but they can also add bulk and complexity to the overall system. Moreover, the use of adapters or spacers may require additional fasteners or mounting mechanisms, which can increase the cost and difficulty of assembly. Overall, the design of electrical assemblies has involved a range of different approaches and components, each with their own advantages and limitations. However, none of these approaches have provided a comprehensive solution that combines the features described in this disclosure.

According to a first aspect, the electrical connection system includes a busbar configured to be connected to a first conductor, a terminal defining a first aperture extending therethrough and electrically connected to a second conductor, and a fastener extending through the first aperture fixing the terminal directly to the busbar at a location offset from the first conductor.

In embodiments, the fastener extends through a second aperture defined in the busbar, the second aperture being aligned with the first aperture. The fastener may comprise a rivet having a deformable end which, after insertion through the first and second apertures, is formed to have a diameter larger than the apertures. Alternatively, the fastener may comprise a bolt having external threads cooperating with internal threads in the second aperture. In a further embodiment, the fastener may comprise an extruded portion of the busbar, the extruded portion extending through the first aperture and having a deformed end securing the terminal to the busbar.

According to a second aspect, the electrical connection system has a busbar including a first weld pad configured to be welded to a first conductor, a second weld pad configured to be welded to a second conductor, and a notch defined between the first weld pad and the second weld pad. The notch separates the first weld pad from the second weld pad. The notch has a width equal to or greater than a thickness of the busbar.

In embodiments, the notch extends beyond the second weld pad. The first and second conductors may be welded to the respective weld pads by ultrasonic welding, laser welding, resistance welding, brazing, or soldering.
**FIG. 1** is an isometric view of an electrical connection system in an electric vehicle's charging inlet according to the prior art.
**FIG. 2** is an exploded view of an electrical connection system suitable for use in an electric vehicle's charging inlet according to a first embodiment.
**FIG. 3** is a top view of the electrical connection system of **FIG. 2** according to the first embodiment.
**FIG. 4** is an exploded view of an electrical connection system suitable for use in an electric vehicle's charging inlet according to a second embodiment.
**FIG. 5** is an isometric bottom view of an electrical connection system suitable for use in an electric vehicle's charging inlet according to a third embodiment.
**FIG. 6** is an isometric top view of the electrical connection system of **FIG. 5** according to the third embodiment.
**FIG. 7** is an isometric view of an electrical connection system suitable for use in an electric vehicle's charging inlet according to a fourth embodiment.
**FIG. 8** is a top view of the electrical connection system of **FIG. 7** according to the fourth embodiment.
**FIG. 9** is a top view of a component of the electrical connection system of **FIG. 7** according to the fourth embodiment.

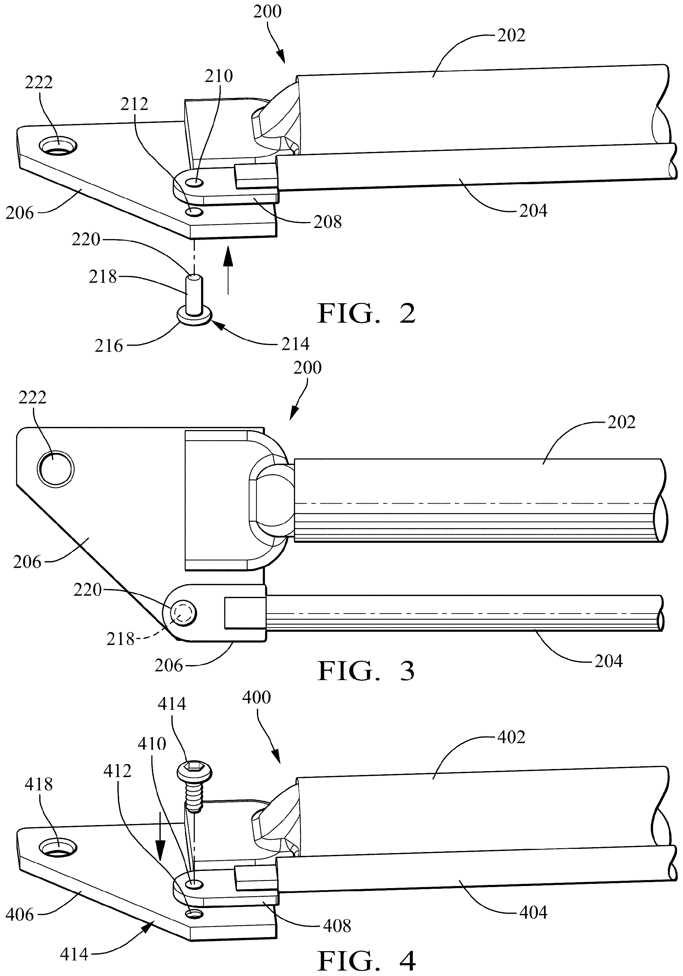

The present disclosure describes several embodiments of an electrical connection system **FIG. 2** and **FIG. 3** are views of a first embodiment of the electrical connection system, hereafter referred to as the system 200, which is suitable for use in an electric vehicle's charging inlet. The system 200 electrically joins and connects two separate conductors 202, 204 so that they may be jointly interconnected to a terminal in an electric vehicle's charging inlet which is similar to the terminals shown in **FIG. 1****.** In this illustrated example, the first conductor 202 is configured to carry direct current (DC) and the second conductor 204 is configured to carry alternating current (AC). The system 200 further includes a busbar 206 which is formed from a sheet of a highly electrically conductive material, such as a copper or aluminum-based alloy. In this first embodiment, the busbar 206 is directly connected to the first conductor 202, for example using a welding process, such as ultrasonic welding, laser welding, resistance welding, brazing, or soldering.

The system also includes a terminal 208 defining a first aperture 210 which extends through the terminal 208. The terminal 208 is electrically connected to the second conductor 204, e.g., using one of the welding process listed above. In alternative embodiments, the terminal 208 may be crimped to the second conductor 204.

A fastener, which in the first embodiment is a rivet 214, extends through the first aperture 210 and a second aperture 212 in the busbar 206 that is aligned with the first aperture 210. The rivet 214 includes a head 216 which is larger than the diameters of the first and second apertures 210, 212 and a shaft 218 protruding from the head 216 which is thinner than the diameters of the first and second apertures 210, 212. After insertion of the shaft 218 through the first and second apertures 210, 212 an end 220 of the shaft 218 opposite the head 216 is deformed, i.e. peened, by linearly or orbitally forming the end 220, to make the diameter of the end 220 larger than the diameters of the first and second apertures 210, 212, thereby fixing the terminal 208 directly to the busbar 206 at a location offset from the first conductor 202. In alternative embodiments, the first conductor 202 may be affixed to the busbar 206 using a terminal in a manner similar to the second conductor 204. The busbar 206 may also define a third aperture 222 configured to connect the system 200 to a terminal in an electric vehicle's charging inlet.

**FIG. 4** is a view of a second embodiment of the electrical connection system, hereafter referred to as the system 400, which is suitable for use in an electric vehicle's charging inlet. The system 400 electrically joins and connects two separate conductors 402, 404 so that they may be jointly interconnected to a terminal in an electric vehicle's charging inlet which is similar to the terminals shown in **FIG. 1****.** In this illustrated example, the first conductor 402 is configured to carry direct current (DC) and the second conductor 404 is configured to carry alternating current (AC). The system 400 further includes a busbar 406 which is formed from a sheet of a highly electrically conductive material, such as a copper or aluminum-based alloy. In this second embodiment, the busbar 406 is directly connected to the first conductor 402, for example using a welding process, such as ultrasonic welding, laser welding, resistance welding, brazing, or soldering.

The system also includes a terminal 408 defining a first aperture 410 which extends through the terminal 408. The terminal 408 is electrically connected to the second conductor 404, e.g., using one of the welding process listed above. In alternative embodiments, the terminal 408 may be crimped to the second conductor 404.

A fastener, which in the second embodiment is a bolt 414, extends through the first aperture 410 and a second aperture 412 in the busbar 406 that is aligned with the first aperture 410. The bolt 414 defines external threads and the second aperture 412 defines corresponding internal threads which allow the bolt 414 to be tightened, thereby fixing the terminal 408 directly to the busbar 406 at a location offset from the first conductor 402. The first aperture 410 preferably has a smooth bore. In alternative embodiments, the internal threads may be formed by an insert in the second aperture 412, such as a self-clinching nut commonly known as PEM^{®} nuts. In other alternative embodiments, the first conductor 402 may be affixed to the busbar 406 using a terminal in a manner similar to the second conductor 404. The busbar 406 may also define a third aperture 416 configured to connect the system 400 to a terminal in an electric vehicle's charging inlet.

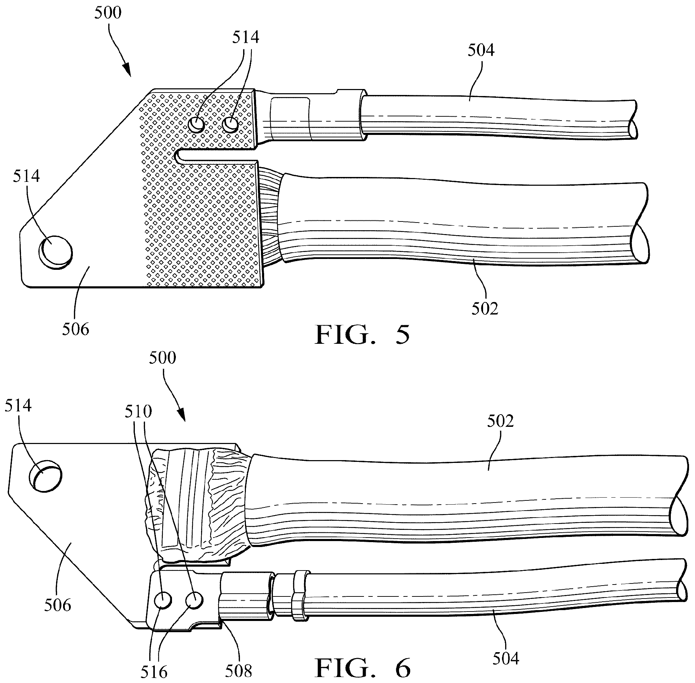

**FIG. 5** and **FIG. 6** are views of a third embodiment of the electrical connection system, hereafter referred to as the system 500, which is suitable for use in an electric vehicle's charging inlet. The system 500 electrically joins and connects two separate conductors 502, 504 so that they may be jointly interconnected to a terminal in an electric vehicle's charging inlet which is similar to the terminals shown in **FIG. 1****.** In this illustrated example, the first conductor 502 is configured to carry direct current (DC) and the second conductor 504 is configured to carry alternating current (AC). The system 500 further includes a busbar 506 which is formed from a sheet of a highly electrically conductive material, such as a copper or aluminum-based alloy. In this first embodiment, the busbar 506 is directly connected to the first conductor 502, for example using a welding process, such as ultrasonic welding, laser welding, resistance welding, brazing, or soldering.

The system also includes a terminal 508 defining a first aperture 510 which extends through the terminal 508. The terminal 508 is electrically connected to the second conductor 504, e.g., using one of the welding process listed above. In alternative embodiments, the terminal 508 may be crimped to the second conductor 504.

A fastener, which in the third embodiment is a post 514 formed by embossing the busbar 506, extends through the first aperture 510. The post 514 includes a shaft protruding from the busbar 506 which is thinner than the diameter of the first aperture 510, After insertion of the shaft through the first aperture 510 an end 516 of the shaft is deformed, i.e. peened, by linearly or orbitally forming the end 516, to make the diameter of the end 516 larger than the diameter of the first aperture 510, thereby fixing the terminal 508 directly to the busbar 506 at a location offset from the first conductor 502. In this example, the terminal has two first apertures 510 and the busbar has two posts 514 which are arranged to inhibit rotation of the terminal 508 around the post 514. This arrangement may also be applied to the rivet 214 of system 200 or the bolt 414 of system 400 to inhibit rotation of the terminals 208, 408. In alternative embodiments, the first conductor 502 may be affixed to the busbar 506 using a terminal in a manner similar to the second conductor 504. The busbar 506 may also define a second aperture 520 configured to connect the system 500 to a terminal in an electric vehicle's charging inlet.

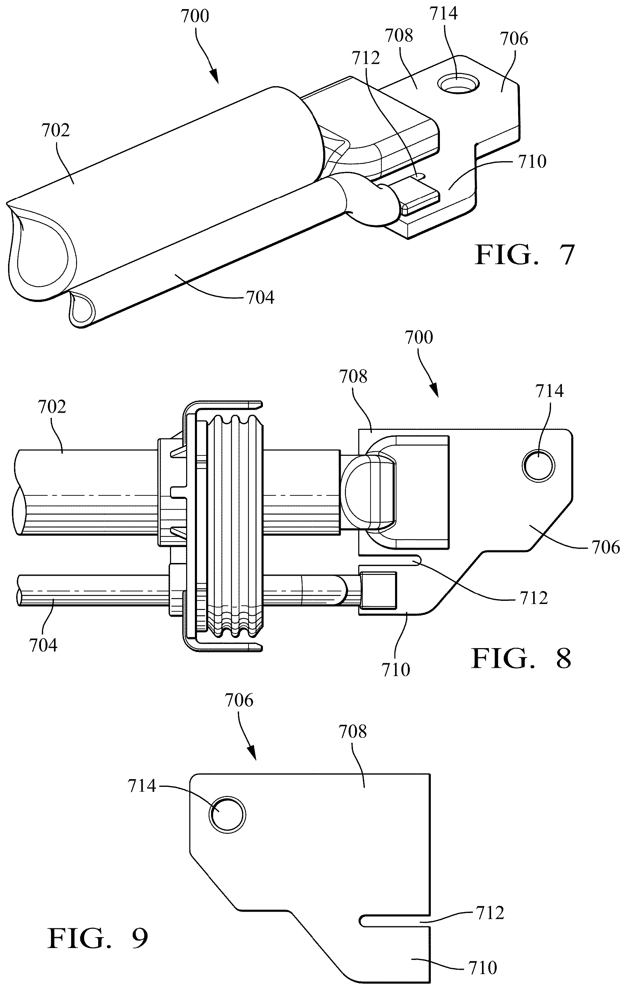

**FIGS. 7-9** are views of a fourth embodiment of the electrical connection system, hereafter referred to as the system 700, which is suitable for use in an electric vehicle's charging inlet. The system 700 electrically connects two separate conductors 702, 704 so that they may be jointly interconnected to a terminal in an electric vehicle's charging inlet which is similar to the terminals shown in **FIG. 1****.** In this illustrated example, the first conductor 702 is configured to carry direct current (DC) and the second conductor 704 is configured to carry alternating current (AC). The system 700 further includes a busbar 706 which is formed from a sheet of a highly electrically conductive material, such as a copper or aluminum-based alloy. In this fourth embodiment, the busbar 706 has a first weld pad 708 which is directly connected to the first conductor 702, for example using a welding process, such as ultrasonic welding, laser welding, resistance welding, brazing, or soldering. The busbar 706 also has a second weld pad 710 which is directly connected to the second conductor 704, for example using a welding process, such as ultrasonic welding, laser welding, resistance welding, brazing, or soldering.

The busbar 706 defines a notch 712 between the first weld pad 708 and the second weld pad 710. The notch 712 separates the first weld pad 708 from the second weld pad 710. The notch 712 has a width that is equal to or greater than a thickness of the busbar 706. The notch is configured to attenuate transmission of vibration or thermal energy from the first weld pad to the second weld pad. The notch 712 extends past the second weld pad 710. This may ensure that energy applied to the second conductor 704 during the process of welding it to the second weld pad 710 does not affect the weld quality of the first conductor 702 to the first weld pad 708, or *vice versa,* when the first and second conductors 702, 704 are welded to the first and second weld pads 708, 710 sequentially. In the case of the first conductor 702 having a larger cross-sectional area than the second conductor 704 as shown in the illustrated example, attachment of the first conductor 702 to the first weld pad 708 requires a higher weld energy than attachment of the second conductor 704 to the second weld pad 710. In this case, the notch 712 is also beneficial in attenuating transmission of vibration or thermal energy from the first weld pad to the second weld pad and *vice versa,* thereby ensuring weld quality of each of the welded connections. In alternative embodiments, the first and second connectors 702, 704 may have similar cross-sectional areas. This may apply to systems 200, 400, and 500 also. The busbar 706 may also define an aperture 714 configured to connect the system 700 to a terminal in an electric vehicle's charging inlet.

Systems 200, 400, 500, and 700 each provide the benefits of eliminating a triple stack connection with a terminal, busbar, and terminal as seen in the prior art. System 500 also provides an anti-rotation feature for the terminal 508 that may be applied to system 200 or 400.

Systems 200, 400, 500, and 700 further provide the benefit of fixing orientation of the first and second conductors on the busbars prior to attachment of the busbars to a terminal in an electric vehicle's charging inlet.

The geometry the notch 712 of system 700 inhibits degradation of weld quality of the first conductor 702 to the first weld pad 708 that may occur during while welding the second conductor 704 to the second weld pad 710. Direct welding of the first and second connectors 702, 704 to the busbar 706 reduces contact resistance and mitigates temperature rise at the connection points.

While the first and second conductors in the various embodiments are shown to be stranded wire cables, in alternative embodiments, they may be solid wire cables or busbars.

While the systems 200, 400, 500, and 700 described herein are configured to use with an electric vehicle's charging inlet, other embodiments may be envisioned that may be used with other electrical devices or assemblies.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or", as used herein, refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

### Discussion of Possible Embodiments

The following are non-exclusive descriptions of possible embodiments of the present invention.

According to one aspect, an electrical connection system includes a busbar configured to be connected to a first conductor, a terminal defining a first aperture extending therethrough and electrically connected to a second conductor, and a fastener extending through the first aperture fixing the terminal directly to the busbar at a location offset from the first conductor.

The assembly of the preceding paragraph can optionally include, additionally and/or alternatively any, one or more of the following features/steps, configurations, and/or additional components.

For example, the fastener may further extend through a second aperture defined in the busbar. The second aperture may be aligned with the first aperture.

For example, an end of the fastener may be deformed after being inserted through the first and second apertures such that the end has a larger diameter than the first and second apertures by linearly or orbitally forming the end.

For example, the fastener may include an extruded portion of the busbar.

For example, an end of the fastener may be deformed after being inserted into the first aperture such that the end has a larger diameter than the first aperture by linearly or orbitally forming the end.

For example, the fastener may include external threads, and the second aperture may include internal threads.

For example, the first conductor may have a larger cross section than the second conductor.

For example, the first conductor may have a cross-sectional area substantially equal to that of the second conductor.

For example, the fastener may form an electrical joint including the terminal and the busbar. The fastener may provide a clamp load to fix the terminal to the busbar.

For example, the first conductor may be configured to conduct direct current, and the second conductor may be configured to conduct alternating current.

For example, the fastener may secure the terminal to the busbar within an interior volume of an electric vehicle charging inlet.

According to one aspect, an electrical connection system includes a busbar having a first weld pad configured to be welded to a first conductor, a second weld pad configured to be welded to a second conductor, and a notch defined between the first weld pad and the second weld pad. The notch may separate the first weld pad from the second weld pad. The notch may have a width that is equal to or greater than a thickness of the busbar.

The assembly of the preceding paragraph can optionally include, additionally and/or alternatively any, one or more of the following features/steps, configurations, and/or additional components.

For example, the notch may extend beyond the second weld pad.

For example, the electrical connection system may further include the first conductor welded to the first weld pad and the second conductor welded to the second weld pad.

For example, the first conductor and the second conductor may be attached to the first weld pad and the second weld pad respectively by ultrasonic welding, laser welding, resistance welding, brazing, or soldering.

For example, attachment of the first conductor may require a higher weld energy than attachment of the second conductor. The notch may attenuate transmission of vibration or thermal energy from the first weld pad to the second weld pad.

For example, the first conductor may have a larger cross-sectional area than the second conductor.

For example, the first conductor may have a cross-sectional area substantially equal to that of the second conductor.

For example, the first conductor may be configured to conduct direct current, the second conductor may be configured to conduct alternating current.

For example, the electrical connection system may further include an electric vehicle charging inlet.

## Claims

1. An electrical connection system (200, 400, 500), comprising:
a busbar (206, 406, 506) configured to be connected to a first conductor (202, 402, 502);
a terminal (208, 408, 508) defining a first aperture (210, 410, 510) extending therethrough and electrically connected to a second conductor (204, 404, 504); and
a fastener (216, 414, 510) extending through the first aperture (210, , 410 510) fixing the terminal (208, 408, 508) directly to the busbar (206, 406, 506) at a location offset from the first conductor (202, 402, 502).

2. The electrical connection system (200, 400) of claim 1, wherein the fastener (216, 414) further extends through a second aperture (212, 412) defined in the busbar (206, 406), wherein the second aperture (412, 520) is aligned with the first aperture (210, 410).

3. The electrical connection system (200) of claim 2, wherein an end (220) of the fastener (216) is deformed after being inserted through the first and second apertures (210, 212) such that the end (220) has a larger diameter than the first and second apertures (210, 212) by linearly or orbitally forming the end (220).

4. The electrical connection system (400) of claim 2 or 3, wherein the fastener (414) comprises external threads and wherein the second aperture (412) comprises internal threads.

5. The electrical connection system (500) of any one of the preceding claims, wherein the fastener comprises an extruded portion of the busbar (506).

6. The electrical connection system (500) of any one of the preceding claims, wherein an end (516) of the fastener (510) is deformed after being inserted into the first aperture (510) such that the end (516) has a larger diameter than the first aperture (510) by linearly or orbitally forming the end (516).

7. The electrical connection system (200, 400, 500) of any one of the preceding claims, wherein the fastener forms an electrical joint comprising the terminal (208, 408, 508) and the busbar (206, 406, 506) and wherein the fastener provides a clamp load to fix the terminal (208, 408, 508) to the busbar (206, 406, 506).

8. The electrical connection system (200, 400, 500) of any one of the preceding claims, wherein the fastener secures the terminal (208, 408, 508) to the busbar (206, 406, 506) within an interior volume of an electric vehicle charging inlet.

9. An electrical connection system (700), comprising:
a busbar (706) having:
a first weld pad (708) configured to be welded to a first conductor (702),
a second weld pad (710) configured to be welded to a second conductor (704); and
a notch (712) defined between the first weld pad (708) and the second weld pad (710), the notch (712) separating the first weld pad (708) from the second weld pad (710), and the notch (712) comprising a width equal to or greater than a thickness of the busbar (706).

10. The electrical connection system (700) of claim 9, wherein the notch (712) extends beyond the second weld pad (710).

11. The electrical connection system (700) of claim 9 or 10, further comprising:
the first conductor (702) welded to the first weld pad (708); and
the second conductor (704) welded to the second weld pad (710).

12. The electrical connection system (700) of claim 11, wherein the first conductor (702) and the second conductor (704) are attached to the first weld pad (708) and the second weld pad (710) respectively by ultrasonic welding, laser welding, resistance welding, brazing, or soldering.

13. The electrical connection system (700) of claim 12, wherein attachment of the first conductor (702) requires a higher weld energy than attachment of the second conductor (704) and wherein the notch (712) attenuates transmission of vibration or thermal energy from the first weld pad (708) to the second weld pad (710).

14. The electrical connection system (200, 400, 500, 700) of any one of the preceding claims, wherein the electrical connection system (200, 400, 500, 700) further comprises an electric vehicle charging inlet.
